# EUROPEAN PATENT APPLICATION

(11) **EP 1 618 795 A1**
(43) Date of publication of application: **25.01.2006**
(21) Application number: 04254330.6
(22) Date of filing: 20.07.2004
(51) Int. Cl.: A23L 1/00, A23L 1/214, A23L 1/0528, A21D 13/08

(54) **Glucomannan composition and its use for preventing water migration in foods**

(71) Applicant: Shimizu Chemical Corporation, Mihara-shi, Hiroshima 729-0321 (JP)
(72) Inventor: Shimizu, Hideki c/o Shimizu Chemical Corporation, Mihara-shi, Hiroshima 729-0321 (JP); Shimizu, Hisao c/o Shimizu Chemical Corporation, Mihara-shi, Hiroshima 729-0321 (JP)
(74) Representative: Lord, Hilton David

(57) **Abstract**

The present invention relates to the prevention of water migration between a food containing relatively high amounts of water and a food having high hygroscopicity and high water permeability, and is characterized by adding an additive coagulating agent to a substrate prepared from an arum root or glucomannan which is powdered, solated or made to be an aqueous solution, or glucomannan which is made pasty, wherein a thickening polysaccharide may be added in addition to the substrate.

The above thickening polysaccharide can comprise one or more substances selected from guar gum, tare gum, gelatin, locust bean gum, sodium alginate, pectin, agar, curdlan, xanthane gum, carrageenan, chitin, chitosan, starch, casein and pullulan.

In addition, the coagulating agent can comprise one or more compounds selected from hydroxides, carbonates and phosphates of alkali such as calcium hydroxide, sodium hydroxide, potassium hydroxide, sodium carbonate, potassium carbonate, trisodium phosphate and tripotassium phosphate, and basic amino acids such as arginine, histidine, methionine, lysine and ornithine.

## Description

The present invention relates to an agent and method for preventing water migration in foods, which occurs when foodstuffs including a coloring material, a seasoning material, and a decoration material all containing relatively high amounts of water are mounted on other foodstuff, or wrapped with other foodstuff.

Conventionally, there has been a problem that when foodstuffs with the surface having high water permeability like a crepe dough, for instance, are contacted with a foodstuff containing relatively high amounts of water such as ketchup, sauce, gravy and jam by topping or coating, the water flows out or migrates to the dough with time, to damage qualities of the food such as texture or appearance and impair the commercial value. There have not been conventionally any effective measure for preventing the water migration.

Because of this, in order to prevent water migration between a food and a foodstuff for the above sort of food, a method of inserting a sheet-shaped substance between the food and the foodstuff (for instance, the method of pouring a gelatinous composition between the dough and the fresh cream of a shortcake) has been employed, but has not provided a satisfactory result because the water migrates in a short time and the quality of the food rapidly deteriorates.

On the other hand, in order to prevent water in a food with a batter from leaching out to the outer surface, the present applicants have proposed a technology as disclosed in Japanese Patent Laid-Open No. 9-70263. However, the method has to form an elastic coating in the batter with the use of refined flour of an arum root or refined glucomannan, in order to strengthen the batter itself around a food to be cooked such as a croquette and a cream croquette, and has to give the batter a certain thickness for covering the whole inner food and elasticity to endure the expansion, in order to prevent the water from leaching out to the outer surface due to the expansion during heating or from cracking the surface. Because of this, the method cannot have been applied to, and is not suitable for application to a food comprising crepe dough or the like, to which delicate mouth-feel and taste are demanded.

An object of the present invention is to provide an agent for preventing water migration, which forms a water-resistant or waterproof film or layer through penetrating into the surface of a foodstuff having a water permeable surface, by further developing mainly the concept of an elastic coating described above.

In addition, another object of the present invention is to use an agent for preventing water migration in a food such as an ice cream, a soft ice cream and a bean-jam-filled wafer ("monaka"), where a foodstuff containing relatively high amounts of water is covered with a crepe dough, a tortilla, a cone cup and the coating material made of corn, as a foodstuff for preventing water from migrating to a coating material by inserting the agent between the inner foodstuff and the coating material.

Still another object of the present invention is to provide a method for preventing water migration by forming a coating or a layer for preventing water migration on a dough surface or in the inner side of the coating material, when a food is actually prepared with the use of the above described agent for preventing water migration. A further object of the present invention is to provide a food which does not degrade its quality due to water migration as described above, even when the above described food is frozen and thawed.

Thus, in a first aspect, the present invention provides an agent for preventing migration of water in foodstuffs, the agent comprising glucomannan, or a source thereof, admixed with a coagulating agent, wherein the agent is, on application to the surface of a foodstuff, or portion thereof, capable of providing a substantially water-resistant barrier.

It will be appreciated that water migration, as referred to herein, refers to the process of water movement from one osmotic potential to another, such as from a relatively wet foodstuff, to a relatively dry or water-free foodstuff. For instance, as described in the present application, when a sauce, such as chilli sauce or ketchup, is placed on a foodstuff such as a tortilla, for instance, which has a relatively low water content compared to the sauce, water will migrate from the sauce or ketchup to the tortilla, making the tortilla soggy. Such migration could also be defined as diffusion or leaching.

The foodstuffs to which the present invention can be applied can also be defined as those having high hygroscopicity, those which readily adsorb moisture, as well as having a high water permeability. Therefore, the present invention is preferably applied to highly hygroscopic foodstuffs or those being more hygroscopic than the material or sauce, for instance, which is intended to be applied thereto.

It will also be appreciated that reference made herein to water-resistance relates to the ability of the agent to form a barrier that is capable, at least initially, of preventing water migrating past or through it into the other foodstuff, or portion thereof. The present invention, as shown in the Examples, is capable of substantially preventing the protected foodstuff from becoming soggy over a period of one hour, for instance, even after the foodstuff has been frozen and then allowed to thaw. However, it will be appreciated that over considerably longer periods of time, some moisture may penetrate the barrier, particularly if the osmotic potential difference between one side of the barrier and the other is significant.

Preferably, the glucomannan, or a source thereof, is in the form of a powder, aqueous solution, gel or paste.

Preferably, the agent forms a coating, layer or film on the surface of the foodstuff, although it is also envisaged, and indeed preferred, that the agent penetrates the surface of the foodstuff, thus impregnating it.

It is also preferred that the agent comprises a source of glucomannan which is an Arum root. Arum is the common name for the Araceae family of flowering plants.

The agent may be applied by any suitable means. Preferably, the agent is sprayed or coated onto the surface of the foodstuff. It is also preferred that agent is applied in the form of a paint or lacquer.

Preferably, the agent further includes a thickening polysaccharide, which is preferably selected from the group consisting of guar gum, tare gum, gelatin, locust bean gum, sodium alginate, pectin, agar, curdlan, xanthane gum, carrageenan, chitin, chitosan, starch, casein and pullulan.

It is also preferred that the coagulating agent includes one or more compounds selected from the group consisting of hydroxides, carbonates and phosphates of alkali such as calcium hydroxide, sodium hydroxide, potassium hydroxide, sodium carbonate, potassium carbonate, trisodium phosphate and tripotassium phosphate, and basic amino acids such as arginine, histidine, methionine, lysine and ornithine.

Preferably, the concentration of glucomannan is 0.1 to 5.0 wt.% with respect to water. Preferably, the concentration of glucomannan is 0.2 to 4.0 wt.%, more preferably 0.3 to 3.0 wt.%, more preferably 0.4 to 3.0 wt.%, more preferably 0.5 to 3.0 wt.%, more preferably 0.5 to 2.5 wt.%, more preferably 0.5 to 2.0 wt.%, 0.6 to 4.0 wt.%, more preferably 0.7 to 4.0 wt.%, more preferably 0.8 to 4.0 wt.%, more preferably 0.9 to 4.0 wt.%, more preferably 1.0 to 4.0 wt.%, more preferably 1.5 to 4.0 wt.%, 2.0 to 4.0 wt.%, more preferably 2.5 to 4.0 wt.%, more preferably 3.0 to 4.0 wt.%, more preferably 3.0 to 5.0 wt.%, and more preferably 3.5 to 5.0 wt.%.

Preferably, the concentration of the thickening polysaccharide, aside from the glucomannan, or source thereof, herein referred to as the substrate, is 0 to 10 wt.% with respect to water. More preferably the concentration of the thickening polysaccharide is 1 to 9 wt.%, more preferably 2 to 8 wt.%, more preferably 4 to 6 wt.%, more preferably 0 to 5 wt.%, more preferably 0 to 3 wt.%, more preferably 0 to 2 wt.%, more preferably 5 to 10 wt.%, more preferably 6 to 10 wt.%, and more preferably 8 to 10 wt.%.

Preferably, the coagulating agent is present in a concentration of 0.05 to 15 wt.% with respect to the glucomannan substrate. More preferably, the coagulating agent is present in a concentration of 0.1 to 12 wt.%, more preferably 0.3 to 10 wt.% , more preferably 0.5 to 8 wt.% , more preferably 0.8 to 7 wt.% , more preferably 0.1 to 5 wt.% , more preferably 0.5 to 15 wt.% , more preferably 1.0 to 15 wt.% , more preferably 5.0 to 15 wt.% , more preferably 10 to 15 wt.% , and more preferably 5.0 to 10 wt.%.

In alternative aspect of the present invention, the agent comprises a substrate prepared from an arum root or glucomannan which is powdered, solated or made to be an aqueous solution, or glucomannan which is made pasty; and an additive coagulating agent.

The present invention also provides a foodstuff to which the agent has been applied, the use of the agent, and a method for preventing water migration in a foodstuff, comprising applying the agent to a foodstuff.

Preferably, the method is for attaching a seasoning material, a coloring material, a decoration material or other edible material onto the surface of a food substrate, comprising:
applying an agent, according to the present invention, onto the face of the above food substrate to which the edible materials are to be attached, to form a waterproof film or layer thereon; and
attaching the edible material.

It is preferred that the material attached to the foodstuff has a higher osmotic potential than the foodstuff, so that an osmotic pressure exists to force water from the material into the foodstuff. It is also preferred that the agent impregnates the surface of the foodstuff, as well as being, optionally, coated on the surface.

In an alternative aspect, the present invention also provides a method for preventing water migration in a food comprising, in a method for attaching a seasoning material, a coloring material, a decoration material and other edible materials all containing relatively high amounts of water onto the surface of a food substrate having permeability formed of edible materials, attaching and impregnating an agent for preventing water migration according to the present invention onto the face of the above food substrate to which the edible materials are to be attached, to form a waterproof film or layer thereon.

In a still further aspect, the present invention provides a method for preventing water migration in a food comprising, in a method for coating or accommodating an inner foodstuff containing relatively high amounts of water with or in an edible coating foodstuff having permeability, attaching and impregnating an agent for preventing water migration according to the present invention on one or both of the inner surface of the coating foodstuff and the surface of the inner foodstuff, to form a waterproof film or layer thereon.
FIGS. 1A and 1B are photographs showing changing state of water migration in crepe dough at the beginning and after one hour of the experiment of Example 1 according to the present invention; and
FIGS. 2A and 2B are photographs showing changing state of water migration in crepe dough at the beginning and after one hour of the experiment of Comparative Example 1 corresponding to the above described Example 1.

The agent for preventing water migration according to the present invention is manufactured by adding a coagulating agent to the substrate consisting of an arum root or glucomannan which is powdered, solated, by which it is meant that is formed into a sol, or made to be a solution, or glucomannan which is made pasty. Among them, for the powdery arum root, a refined flour of arum root is used which is made by washing the arum root with water, slicing, drying and removing the starches. In the present invention, the agent can comprise an arum root which is directly mashed into a sol state, or further the refined flour of arum root in the state of being dissolved (swelled) in water.

Glucomannan is a storable polysaccharide existing in a tuber of arum, and is found in a concentration of about 8% in an arum root. The glucomannan used in the present invention is water soluble glucomannan refined with alcohol [brand name: Rheolex RS (made by Shimizu Chemical Corporation)], but general glucomannan, though having variations in bloating tendency (solubility), should exhibit a similar effect.

The agent can include one or more thickening polysaccharides in addition to the above substrate, out of guar gum, tare gum, gelatin, locust bean gum, sodium alginate, pectin, agar, curdlan, xanthane gum, carrageenan, chitin, chitosan, starch, casein and pullulan, which impart elasticity and hardness to a formed waterproof coating or waterproof layer, to further reliably prevent water migration.

The coagulating agent used in the present invention can comprise one or more compounds out of hydroxides, carbonates and phosphates of alkali such as calcium hydroxide, sodium hydroxide, potassium hydroxide, sodium carbonate, potassium carbonate, trisodium phosphate and tripotassium phosphate, and basic amino acids such as arginine, histidine, methionine, lysine and ornithine.

The concentration of glucomannan in the substrate/agent is preferably about 0.1 to 5.0 wt.% with respect to water. Glucomannan of 0.1% or less does not form the waterproof coating or layer. Glucomannan exceeding 5% makes the agent poorly fluid and hardly coated or sprayed.

In addition, the concentration of a thickening polysaccharide aside from a substrate is preferably 0 to 10 wt.% with respect to water. When the concentration exceeds 10%, the agent lacks in free water, and similarly becomes difficult to be coated or sprayed onto a dough or the like. The concentration of the coagulating agent is preferably 0.05 to 15 wt.% with respect to glucomannan. When the concentration exceeds 15%, the coagulating agent damages gel because of making the alkalinity of the agent too strong, and may make the agent not match the purpose of use.

Hereinbelow, the method for preventing water migration in the above described food by using the above described agent for preventing water migration will be described.

When a seasoning material, a coloring material, a decoration material and/or other edible materials, all of which contain relatively high amounts of water, are attached onto the surface of a food substrate, having permeability formed of an edible material for instance, such as when foods containing relatively high amounts of water such as ketchup are topped or coated onto a crepe dough, the above described agent for preventing water migration is attached onto the surface to which the edible material of the above described food substrate is to be attached, to form a waterproof film or layer therein.

When an inner foodstuff containing relatively high amounts of water such as an ice cream, a soft ice cream and a candy, is coated or accommodated with or in an edible coating foodstuff having permeability, such as a coating material made of corn or a cone cup, the above described agent for preventing water migration is attached and penetrated by spraying or coating onto one or both of the inner surface of the coated foodstuff and the surface of the inner foodstuff, to form the waterproof impregnated layer therein. The above cup and the coating material are not limited to those made of corn, but may be, for instance, crepe dough or other edible materials.

According to the method of the present invention described above which comprises the steps of preparing a solution containing glucomannan, coating or spray coating the solution onto a sheet-shaped food such as a crepe dough and tortilla, subsequently drying the dough, and then topping or coating a ketchup, a sauce or a gravy on the dough, it becomes possible to form a layer impregnated by the agent for preventing water migration on the surface of the dough, to effectively prevent water migration toward the dough. In addition, even when freezing and thawing are repeated to the above treated foods, water in the foods can be prevented from migrating toward the dough during thawing.

Drying after coating (spraying) of the agent for preventing water migration onto the surface of the above dough or the like is preferable for stabilizing the film (layer), but is not necessarily required when the film is rapidly stabilized. In addition, as a result of various experiments, it became clear that the use of glucomannan is the most effective for preventing the above water migration.

Furthermore, when the agent is applied to a cone cup of a soft ice cream or an ice cream or a cone bean-jam-filled wafer, and a bean-jam-filled wafer used for Japanese sweet, for instance, it prevents water migration toward the cone cup or the cone bean-jam-filled wafer, to contribute to the improvement of the quality and enable the period of keeping foods quality to be extended.

The present invention will be described with reference to examples, which are non-limiting thereon.

### Example 1

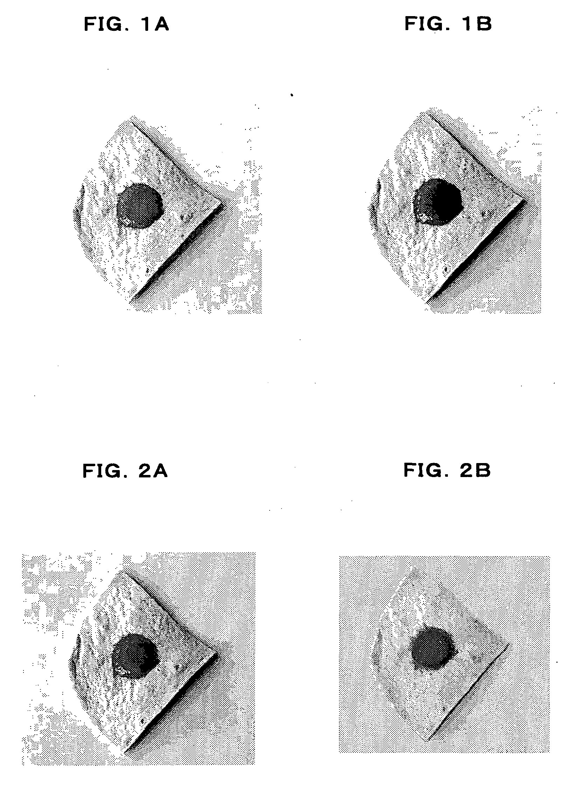

A solution containing 0.5% of a refined flour of an arum root or glucomannan and 0.025g of calcium hydroxide, was uniformly and thinly sprayed on a crepe dough to form a film, then the surface of the dough was dried to stabilize a waterproof film (layer) better, 3g of a chili sauce was mounted thereon, and the change with time was observed after one hour. Then, the water migration of the chili sauce was not recognized in the dough. FIG. 1A and FIG. 1B are photographs respectively showing the state of water migration at the beginning of the experiment and the state after one hour from the beginning of the experiment.

### Comparative Example 1

As a comparative example as opposed to the above described example, a crepe dough having no film formed thereon was tested in a similar method in the Example 1. As a result of having observed the change after one hour, it was recognized that the chili sauce obviously migrated to the dough and water migrated. FIG. 2A and FIG. 2B are photographs respectively showing the state at the beginning of the experiment and the state after one hour from the beginning of the experiment.

### Example 2

The food of the above Example 1 was frozen and thawed, and then the change of the dough after being thawed was similarly observed, but the water migration and the like were not recognized.

### Comparative Example 2

The food of the Comparative Example 1 instead of the Example 2 was frozen and thawed, then the change of the dough after being thawed was observed in a similar way in the Example 2, and it was recognized that the chili sauce migrated to the dough and water migrated.

## Claims

1. An agent for preventing migration of water in foodstuffs, the agent comprising glucomannan, or a source thereof, admixed with a coagulating agent, wherein the agent is, on application to the surface of a foodstuff, or portion thereof, capable of providing a substantially water-resistant barrier.

2. An agent according to claim 1, wherein the glucomannan, or a source thereof, is in the form of a powder, aqueous solution, gel or paste.

3. An agent according to claim 1 or 2, wherein the agent comprises a source of glucomannan which is an Arum root.

4. An agent according to any preceding claim, wherein the agent is sprayed or coated onto the surface of the foodstuff.

5. An agent according to any of claims 1-3, wherein the agent is applied in the form of a paint or lacquer.

6. An agent according to any preceding claim, further comprising a thickening polysaccharide.

7. An agent according to claim 6, wherein the thickening polysaccharide comprises one or more substances selected from the group consisting of guar gum, tare gum, gelatin, locust bean gum, sodium alginate, pectin, agar, curdlan, xanthane gum, carrageenan, chitin, chitosan, starch, casein and pullulan.

8. An agent according to any preceding claim, wherein the coagulating agent comprises one or more compounds selected from the group consisting of hydroxides, carbonates and phosphates of alkali such as calcium hydroxide, sodium hydroxide, potassium hydroxide, sodium carbonate, potassium carbonate, trisodium phosphate and tripotassium phosphate, and basic amino acids such as arginine, histidine, methionine, lysine and ornithine.

9. An agent according to any preceding claim, wherein the concentration of glucomannan is 0.1 to 5.0 wt.% with respect to water.

10. An agent according to claim 6 or 7, wherein the concentration of the thickening polysaccharide is 0 to 10 wt.% with respect to water.

11. An agent according to any preceding claim, wherein the coagulating agent is present in a concentration of 0.05 to 15 wt.% with respect to the glucomannan, or source thereof.

12. Use of the agent according to any preceding claim.

13. A method for preventing water migration in a foodstuff, comprising applying the agent, according to any of claims 1-10, to a foodstuff.

14. A method according claim 13, for attaching a seasoning material, a coloring material, a decoration material or other edible material onto the surface of a food substrate, comprising:
applying an agent, according to any of claims 1-10, onto the face of the above food substrate to which the edible materials are to be attached, to form a waterproof film or layer thereon; and
attaching the edible material.

15. A method according claim 14,wherein the material attached to the foodstuff has a higher osmotic potential than the foodstuff.

16. A method according to any of claims 13-15,wherein the agent impregnates the surface of the foodstuff.

17. A foodstuff to which the agent, according to any of claims 1-10, has been applied.
